**Europäisches Patentamt**

**European Patent Office**

**Office européen des brevets**

(19)

(11) Numéro de publication : **0 515 277 B1**

(12)

# FASCICULE DE BREVET EUROPEEN

(45) Date de publication du fascicule du brevet :
**06.12.95 Bulletin 95/49**

(51) Int. Cl.⁶ : **H04J 3/17,** H04M 3/36

(21) Numéro de dépôt : **92401395.6**

(22) Date de dépôt : **21.05.92**

(54) **Analyseur modulaire de trafic de signaux numériques.**

(30) Priorité : **24.05.91 FR 9106286**

(43) Date de publication de la demande :
**25.11.92 Bulletin 92/48**

(45) Mention de la délivrance du brevet :
**06.12.95 Bulletin 95/49**

(84) Etats contractants désignés :
**DE GB**

(56) Documents cités :
**EP-A- 0 050 917**
**EP-A- 0 213 651**
**GB-A- 2 113 880**
**GB-A- 2 129 560**
**GB-A- 2 169 476**

(73) Titulaire : **FRANCE TELECOM**
**6, Place d'Alleray**
**F-75015 Paris (FR)**

(72) Inventeur : **Rebourg, Jean-Claude**
**95, avenue de la Clairière**
**F-78120 Rambouillet (FR)**
Inventeur : **Jeanclaude, Serge**
**14, avenue Jean Jaurès**
**F-92390 Villeneuve-La-Garenne (FR)**
Inventeur : **Ezran, Philippe**
**2, Clos du Puits**
**F-78990 Elancourt (FR)**

(74) Mandataire : **Fréchède, Michel**
**Cabinet Plasseraud**
**84, rue d'Amsterdam**
**F-75009 Paris (FR)**

**EP 0 515 277 B1**

## Description

L'invention concerne un analyseur modulaire de trafic d'un ou plusieurs canaux de transmission multivoies de signaux numériques.

L'analyse fine du type et de la qualité de trafic de signaux numériques, transmis sur un ou plusieurs canaux de transmission multivoies, est fondamentale en vue de l'ingénierie et de la gestion des équipements du réseau de transmission téléphonique correspondant. Un tel type d'analyse permet de mieux dimensionner les paramètres des équipements de transmission tels que, par exemple, nombre de voies affectées à une liaison, nécessité de l'utilisation d'équipements spéciaux tels que concentrateurs de type CELTIC ou MICDA. Une telle analyse est également nécessaire pour l'établissement d'une exploitation et d'une gestion rationnelles du réseau de transmission, notamment en ce qui concerne la définition de tranches horaires, pour la facturation du trafic, la surveillance de l'utilisation des lignes spécialisées et la détection de voies en défaut ou non utilisées.

Des travaux récents ont été effectués afin de mettre en oeuvre de tels types d'équipements. Ces derniers sont toutefois complexes et ne permettent, dans la plupart des cas, qu'une analyse statistique rudimentaire ou, à tout le moins, incomplète des conditions du trafic. Parmi ces derniers, on peut citer le système divulgué dans le document GB-A-2 169 476, conforme au préambule de la revendication 1, et l'équipement décrit par la demande de brevet français publiée sous le numéro 2 643 523. On notera toutefois que l'équipement décrit dans ce document met en oeuvre un système de filtrage à prédiction linéaire adaptative en vue d'engendrer un jeu de coefficients de prédiction de la nature du signal transmis, permettant, lors de l'obtention d'une série de coefficients de prédiction stable, d'effectuer une discrimination de la nature correspondante de ce signal transmis.

Un tel mode opératoire met en jeu une puissance de calcul importante puisque le jeu des coefficients doit être calculé à chaque échantillon, afin d'assurer une convergence convenable du filtre adaptatif dans une durée de traitement convenable, en tout cas compatible avec une utilisation en temps réel. Ainsi, le dispositif mis en oeuvre dans l'équipement précité ne comporte-t-il pas moins de 13 microprocesseurs, pour une capacité d'analyse cependant incomplète, puisque ce type d'équipement ne permet ni la reconnaissance des voies en défaut, caractérisées par des séquences numériques répétitives, ni le 64 kb/s, ni la détection des lignes dont le bruit dépasse le seuil de détection, c'est-à-dire des lignes considérées comme en phase de parole. En outre, ce type d'équipement, à la limite de ses capacités de traitement, ne peut-il prétendre assurer l'analyse précitée que pour, au mieux, 30 voies bidirectionnelles, sans possibilité d'évolution, l'absence d'un processus de compression des résultats d'analyse ne permettant, au mieux, qu'un temps d'observation global de 19 heures, dans le cas du regroupement des résultats par tranches d'une minute et d'une capacité mémoire de 1,44 Mo.

La présente invention a pour but la mise en oeuvre d'un système analyseur de trafic d'un ou plusieurs canaux de transmission multivoies de signaux numériques ne présentant pas les limitations de l'art antérieur.

Un autre objet de la présente invention a pour but la mise en oeuvre d'un système analyseur de trafic d'un ou plusieurs canaux de transmission multivoies de signaux numériques, notablement simplifié, dans son architecture, vis-à-vis des systèmes comparables de l'art antérieur.

Un autre objet de la présente invention est la mise en oeuvre d'un système analyseur de trafic d'un ou plusieurs canaux de transmission multivoies de signaux numériques permettant de discerner les types de signaux tels que, silence, bruit, séquence numérique fixe, signalisation, retour d'appel, parole, fréquence fixe à 2 100 Hz, modem de débit inférieur, égal ou supérieur à 4 800 b/s, transmission de données à 64 kb/s, et de déterminer le ou les sens de transmission, notamment en cas de transmission en full duplex.

Un autre objet de la présente invention est également un système analyseur de trafic d'un ou plusieurs canaux de transmission de signaux numériques susceptible de travailler en temps partagé sur plusieurs multiplexeurs de type MIC ou analogue.

Le système analyseur de trafic d'un ou plusieurs canaux de transmission multivoies de signaux numériques, objet de la présente invention, est conforme à l'objet de la revendication 1.

Le système objet de l'invention peut être utilisé pour la surveillance de réseaux de transmission téléphonique numérique, tel que réseau numérique à intégration de services, ou le réseau téléphonique analogique, au niveau de conversions analogiques/numériques locales.

Une description plus détaillée du système objet de l'invention sera donnée ci-après en relation avec les dessins dans lesquels,

- la figure 1, relative à l'art antérieur, est donnée à titre de rappel de la constitution d'un ou plusieurs canaux de transmission de signaux numériques et des voies de transmission correspondantes,
- la figure 2a représente, à titre d'exemple non limitatif, un premier mode de réalisation du système analyseur de trafic d'un ou plusieurs canaux de transmission multivoies de signaux numériques,

EP 0 515 277 B1

- la figure 2b représente un organigramme général du processus de fonctionnement du système analyseur de trafic tel que représenté en figure 2a,
- la figure 2c représente le détail d'un processus de calcul et détermination des valeurs spectrales du signal analysé sur un temps d'analyse donné particulièrement adapté au mode de réalisation des figures 2a et 2b,
- la figure 3 représente, à titre d'exemple non limitatif, un deuxième mode de réalisation du système analyseur de trafic d'un ou plusieurs canaux de transmission multivoies de signaux numériques.

Préalablement à la description proprement dite de l'analyseur de trafic de signaux numériques objet de la présente invention, un rappel sur la forme et la nature des signaux téléphoniques, notamment en téléphonie numérique, sera donné ci-après.

Initialement conçu pour acheminer le signal de parole par le moyen de signaux analogiques ou numériques, le réseau téléphonique a pour objet actuellement de transmettre, en outre, d'autres signaux tels que des données numériques ou des fréquences de signalisation ayant un objet bien déterminé. Cependant, le réseau peut être le siège de bruits parasites, et des signaux parasites correspondants peuvent perturber la transmission normale des signaux utiles. En outre, dans le cas de la transmission de signaux numériques, il faut mentionner l'existence de signaux spécifiques non significatifs transmis à un débit de 64kb/s.

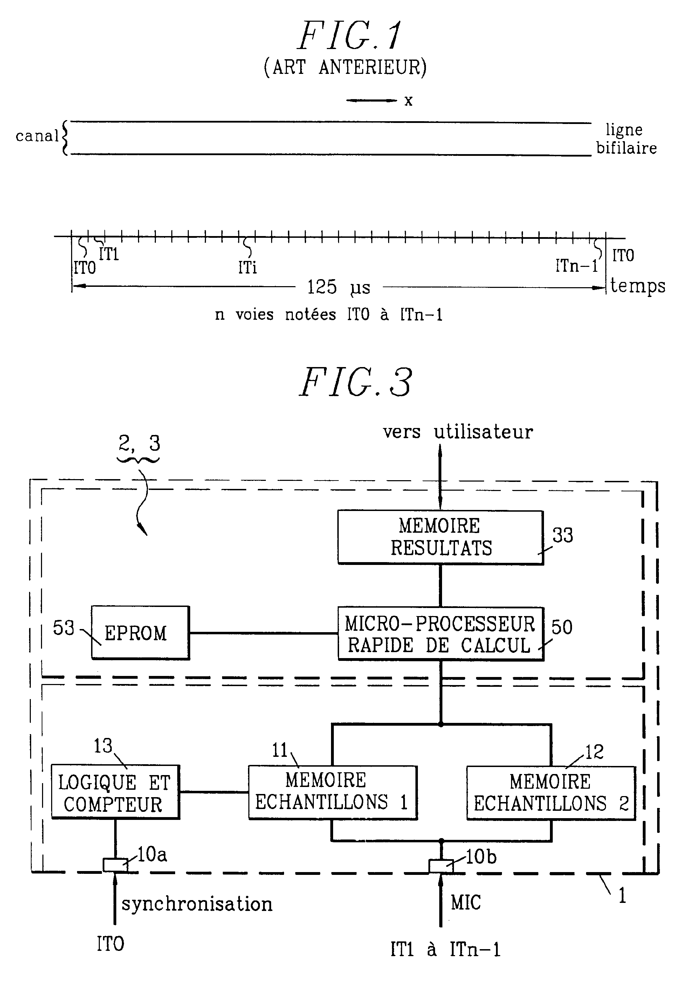

En référence à la figure 1, relative à l'art antérieur, on rappelera que, d'une manière générale, un canal est constitué par une ligne téléphonique par exemple de type bifilaire assurant la liaison entre un ou plusieurs abonnés, la transmission de signaux numériques étant effectuée pour le canal tel que représenté en figure 1 sur une pluralité de voies définies par des intervalles de temps notés : IT0, IT1,...ITi,...,ITn-1. A titre d'exemple non limitatif, un canal de transmission classique comporte ainsi 32 voies ouvertes périodiquement et numérotées de 0 à 31 successivement.

La période d'ouverture de chaque voie est de manière générale égale à 125 micro-secondes, chaque voie étant ouverte successivement pour la transmission de données ou de signaux correspondants. On notera en particulier que la voie notée IT0 correspond à un signal de synchronisation, lequel comprend une signature spécifique, laquelle ne sera pas décrite dans la description.

En ce qui concerne les principaux signaux transmis par l'ensemble des voies précitées, sur un canal par exemple, on rappellera que la parole est caractérisée par des périodes d'activité présentant de fortes variations de puissance, de près de 40 dB, ces variations étant séparées par des périodes de silence. Cependant, pour des intervalles de temps inférieurs à 25 ms, le signal correspondant peut être considéré comme ayant un spectre constant. Dans ces conditions, un temps élémentaire d'analyse TA ayant une valeur de cet ordre pourra être retenue pour effectuer la distinction signal de parole/autre signal.

Les données, ou suites numériques de valeurs binaires "0" et "1", sont transmises par l'intermédiaire de porteuses modulées en amplitude, en phase ou en fréquence ou directement à un débit de 64 kb/s. Pour les débits relativement faibles, inférieurs ou égaux à 4 800 b/s, une modulation simple est utilisée. Dans le cas de débits supérieurs, on combine la modulation de phase et d'amplitude. Des modulateurs-démodulateurs, assurant une modulation à l'émission et une démodulation à la réception, transforment le signal numérique en signal transmissible sur voie téléphonique dont la bande passante est comprise entre 300-3400 Hz.

Le signal d'inhibition des annuleurs d'échos est un signal continu de fréquence 2100 Hz. Ce signal doit précéder les émissions de données afin que celles-ci ne soient pas perturbées.

Les signaux de signalisation de lignes sont des signaux à fréquence fixe. Les codes 4 et 5 utilisent respectivement les fréquences 2040-2400 Hz, et 2400-2600 Hz. Ces signaux sont échangés en début et en fin de communication. En signalisation selon le code R2, utilisé en Europe, la signalisation de ligne est transmise séparément.

Les signaux d'enregisteur qui correspondent à la numérotation sont généralement transmis sous forme de code utilisant deux fréquences parmi plusieurs et émises simultanément. En code 5, il s'agit de 6 fréquences séparées de 200 Hz, de 700 à 1700 Hz. En code R2 de 2 séries de 6 fréquences, la première comprise entre 540 et 1140 Hz, la seconde entre 1380 et 1980 Hz. En code 4, les fréquences utilisées sont les mêmes que les fréquences de signalisation de ligne.

Les signatures fixes connues sous le vocable anglo-saxon comme "Pattern Fix" sont des signaux de lignes répétitifs qui peuvent indiquer des anomalies de fonctionnement ou des lignes en défaut.

Les signaux de bruits sont des signaux parasites dont le niveau d'énergie dépasse le seuil de détection d'activité et que l'on trouve sur des lignes perturbées.

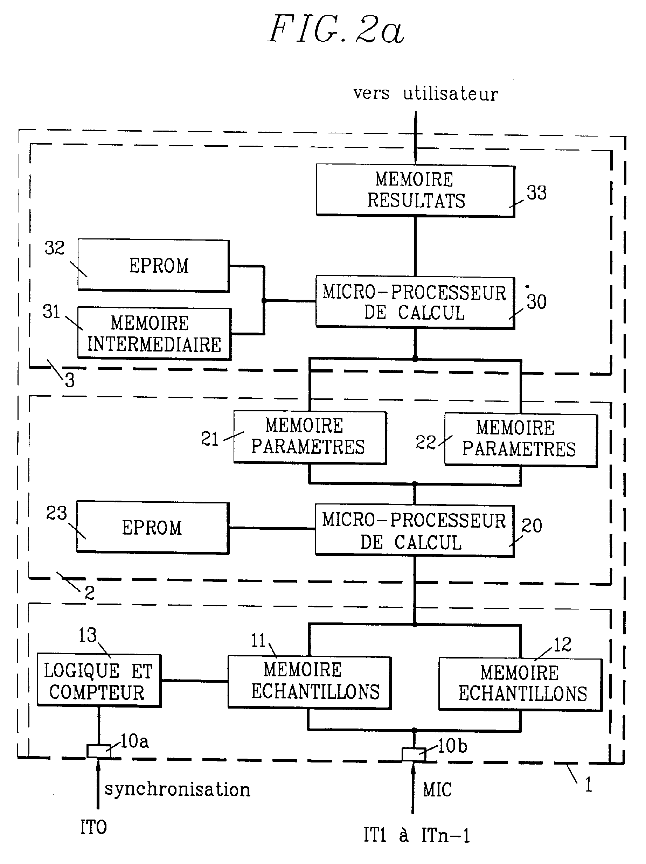

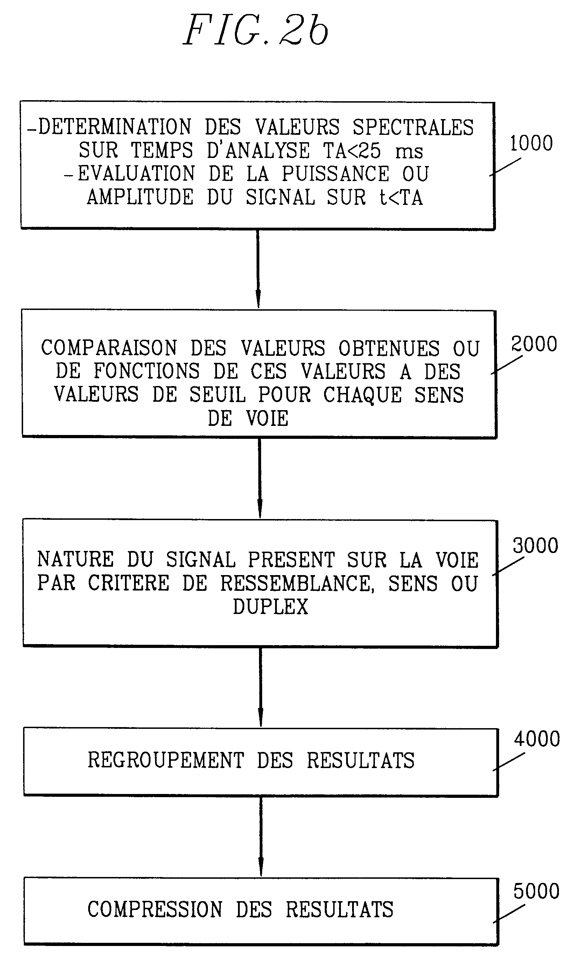

Le système analyseur de trafic d'un ou plusieurs canaux de transmission multivoies de signaux numériques objet de la présente invention sera maintenant décrit en liaison avec la figure 2a.

D'une manière particulièrement avantageuse, le système analyseur représenté sur la figure précitée comporte avantageusement un module 1 d'acquisition et de mémorisation des échantillons, ces échantillons étant constitués par des échantillons numériques successifs représentatifs des signaux précédemment men-

3

tionnés dans la description. Le module 1 d'acquisition est couplé au canal de transmission par l'intermédiaire d'une sonde adaptée, non représentée au dessin, cette sonde permettant d'effectuer une discrimination entre les signaux de synchronisation transmis par la première voie notée IT0 sur la figure 1, et les autres voies notées IT1 à ITn-1. Le type de sonde utilisé peut être normalement tout type disponible dans le commerce et en particulier les circuits commercialisés par la Société SIEMENS sous la référence ACFA-PLCC44 ou IPAT-PLCC28. On notera que ce type de sonde permet essentiellement d'effectuer une transformation série parallèle des signaux numériques véhiculés par les voies du canal précité.

En outre, ainsi que représenté sur cette même figure 2a, le système analyseur de l'invention comprend un module 2 de traitement des échantillons mémorisés, ce module délivrant en fonction des types de signaux des signaux de paramètres discriminés.

En outre, un module 3 de compression des signaux de paramètres discriminés comportant au moins un circuit de discrimination dédié par type de signal transitant sur le canal de transmission permet, pour un ensemble de ceux-ci, leur répartition en fonction du type du signal ou d'un mode d'analyse temporelle des voies constituant le canal de transmission, pour un ou plusieurs canaux, en signaux résultats.

Ainsi qu'on l'a en outre représenté en figure 2a, le module 1 d'acquisition et de mémorisation comporte avantageusement un premier et un deuxième circuit mémoire d'échantillons, noté respectivement 11 et 12, ces circuits mémoire étant couplés aux canaux de la voie de transmission par l'intermédiaire de ports d'entrée notés 10a et 10b sur la figure 2a, et bien entendu de la sonde précédemment mentionnée et non représentée.

D'une manière particulièrement avantageuse, le premier et le deuxième circuits mémoire d'échantillons 11, 12, fonctionnent de façon alternée à l'écriture, respectivement à la lecture, pendant une durée déterminée égale à un temps d'analyse TA des échantillons.

D'une manière générale, on notera que dans les mémoires d'échantillons 11 et 12 précitées, des valeurs numériques proportionnelles à l'amplitude des échantillons du signal analysé sont introduites au cours du fonctionnement. Le traitement d'un signal analogique nécessite une conversion analogique-numérique. Dans le cas de l'analyse d'un train d'échantillon délivré par un codeur de type MIC, les échantillons codés sur 8 bits, selon l'avis G732 du CCITT, doivent être linéarisés sur 13 bits. Une telle transformation peut être effectuée avant la mise en mémoire des échantillons. Elle peut aussi l'être par le dispositif de traitement de signal, c'est-à-dire dans le module de traitement 2 précédemment mentionné, par consultation d'une table de valeurs correspondante. Dans ce dernier cas, les échantillons sont directement mémorisés sous forme de mots de 8 bits. Ainsi, les mémoires d'échantillons 11 et 12 travaillent de façon alternée, le module 2 de traitement lisant et traitant les valeurs mémorisées dans l'une des mémoires au cours du temps d'analyse précédent, pendant l'enregistrement des valeurs d'échantillons dans l'autre mémoire.

Ainsi qu'on l'a en outre représenté en figure 2a, le module 2 de traitement comporte un circuit de calcul 20 et de mémorisation auxiliaire 21, 22 permettant à partir de la lecture des échantillons mémorisés dans l'un des premier ou deuxième circuits mémoire 11, 12, précédemment mentionnés, la mémorisation de paramètres permettant le calcul, par le circuit de calcul 30, des valeurs spectrales et de puissance ou d'amplitude moyenne de ces échantillons, ainsi que la discrimination de ces valeurs par comparaison de ces valeurs ou de fonctions de celles-ci à des valeurs de seuil.

On notera de manière particulièrement avantageuse que la comparaison et, en définitive, la discrimination des signaux analysés est effectuée pour chaque sens de propagation de ces derniers sur le canal considéré pour constituer les signaux de paramètres discriminés.

On comprendra ainsi que l'analyse des valeurs représentatives des signaux est constituée par un processus de calcul de paramètres servant à la discrimination des valeurs spectrales sur le temps d'analyse TA et évaluation de moyennes de ces signaux sur des temps plus courts. Ces paramètres permettent de mesurer les variations de la puissance du signal.

Ainsi qu'on pourra le noter à l'observation de la figure 2a, les circuits de mémorisation auxiliaire comportent un premier et un deuxième circuit de mémorisation auxiliaire notés 21 et 22 fonctionnant de manière analogue au circuit mémoire d'échantillons 11, 12, de façon alternée à l'écriture, respectivement en lecture.

D'une manière générale, on comprendra qu'afin d'obtenir des résultats fiables, les paramètres utilisés doivent être stables pendant la durée élémentaire d'analyse. Les caractéristiques du signal de parole conduisent alors à choisir un temps d'analyse TA inférieur à 25 ms.

Ainsi que représenté sur la figure 2a, au circuit de calcul 20 est également associé un circuit de type mémoire morte EPROM, noté 23, dans lequel le programme de calcul des paramètres ou d'une partie de ceux-ci est mémorisé de manière permanente.

En outre, ainsi qu'on l'a représenté également en figure 2a, le module de compression 3 des signaux de paramètres discriminés comporte, de manière avantageuse, un circuit de calcul 30 permettant d'assurer le traitement des signaux de paramètres discriminés mémorisés dans l'un des premier ou deuxième 21, 22, circuits de mémorisation auxiliaires pour engendrer les signaux de résultats. On notera que, de manière avantageuse, le module 3 de compression peut comporter, par exemple, une mémoire intermédiaire 31 constituée par une mémoire vive de type RAM et destinée à assurer le rôle d'une mémoire de travail pour le circuit de calcul 30.

Le module de compression 3 comporte également une mémoire morte de type EPROM, notée 32, laquelle comporte le programme de calcul de discrimination, de compression, et de formatage des signaux résultats, ainsi qu'il sera décrit ci-après dans la description. Bien entendu, les signaux de résultats sont alors mémorisés au niveau d'un circuit 33 de mémorisation de ces signaux.

On notera que, d'une manière avantageuse, une répartition des tâches de calcul des paramètres de discrimination et de la discrimination proprement dite peut être effectuée entre le circuit de calcul 20 du module 2 de traitement et le circuit de calcul 30 du circuit de compression.

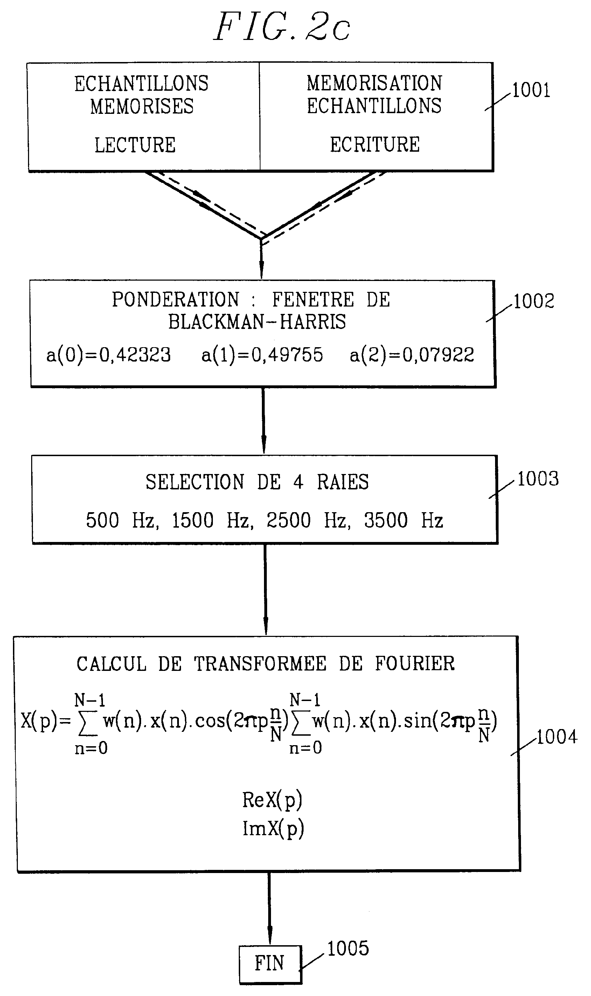

Une description plus détaillée d'un processus de calcul particulièrement avantageux mis en oeuvre au moyen du système d'analyse tel que décrit en liaison avec la figure 2a sera maintenant donnée en relation avec les figures 2b et 2c.

Ainsi qu'on l'a représenté en figure 2b, les circuits de calcul 20 et 30 et de mémorisation auxiliaire, et notamment les mémoires mortes 23 et 32 comportent des sous-programmes permettant d'effectuer successivement une détermination, notée 1000, des valeurs spectrales du signal analysé sur un temps d'analyse TA déterminé et une évaluation de la puissance ou de l'amplitude du signal analysé, puis une comparaison 2000 des valeurs spectrales et de puissance ou de fonction de ces valeurs à des valeurs de seuil pour chaque sens de propagation de chaque voie du canal de transmission. Une discrimination notée 3000 de la nature du signal présent sur la voie par critère de ressemblance est ensuite effectuée suite à la comparaison précédemment mentionnée en 2000. On notera que, de manière avantageuse, la discrimination par critère de ressemblance peut être effectuée suite à la comparaison précitée par la prise en compte de plages de valeurs de décision correspondant, par exemple, à une logique floue selon des critères déterminés. Enfin, un processus de regroupement en 4000 est effectué, ce processus de regroupement permettant un regroupement des résultats d'analyse par sélection selon une heuristique déterminée. Le processus de regroupement est suivi d'un processus de compression en 5000 des résultats.

D'une manière générale, on notera que les premières étapes réalisées par les sous-programmes correspondant à la référence 1000 peuvent avantageusement être réalisées par le circuit de calcul 20, alors que la fin de l'étape 1000 et les étapes 2000, 3000, 4000 et 5000 peuvent au contraire être réalisées par le circuit de calcul 30, par exemple. On comprendra bien sûr que les circuits de calcul 20 et 30 peuvent être réalisés par des processeurs de calculs rapides tels que, par exemple, le circuit commercialisé par la Société TEXAS INSTRUMENTS sous la référence TMS 32010, équipés de leur mémoire de programme. Le déroulement des processus tels qu'indiqué en figure 2b n'est pas limitatif, un agencement judicieux des différentes procédures de calcul pouvant être réalisé en fonction des disponibilités des deux circuits de calcul précités.

Selon un mode de réalisation particulièrement avantageux du sous-programme 1000 permettant d'analyser les valeurs spectrales du signal analysé, celui-ci peut comprendre, ainsi que représenté en figure 2c, une routine 1001 d'appel alterné des valeurs d'échantillons mémorisés au niveau des mémoires échantillons 11 et 12 précédemment décrites, une routine 1002 de pondération spatio-temporelle de ces échantillons à partir d'une fenêtre de pondération de type Blackman-Harris. Dans le cas de l'utilisation de la fenêtre de pondération précitée, les coefficients a(0), a(1) et a(2) sont choisis avec les valeurs ci-après :

. a(0) = 0,42323
. a(1) = 0,49755
. a(2) = 0,07922.

A la suite des étapes précitées, une routine 1003 est prévue, laquelle permet une sélection de 4 raies spectrales préférentielles uniformément réparties dans la bande de fréquence du signal analysé, les raies à 500, 1500, 2500 et 3500 Hz, par exemple. Cette sélection des raies peut être effectuée par le choix ou l'initialisation de paramètres correspondants, paramètres p = N/·16, 3N/16, 5N/16, 7N/16 pour un nombre N d'échantillons = 32.

La routine de sélection des 4 raies précitées est suivie alors d'une routine 1004 de calcul de la transformée de FOURIER :

$$X(p) = \sum_{n=0}^{N-1} w(n).x(n).\cos(2\pi p\underline{n}) - i \sum_{n=0}^{N-1} w(n).x(n).\sin(2\pi p\underline{n}).$$

Cette relation est alors calculée pour des valeurs du paramètre p précité correspondantes, soit les valeurs représentatives des raies spectrales préférentielles précédemment mentionnées.

Dans la relation précédemment citée, w(n) vérifie l'expression :

$$w(n) = a(0) - a(1).\cos 2\pi n/32 + a(2).\cos 4\pi n/32.$$

Dans la relation précitée, N = 32 et $0 \leqq n \leqq$ N-1.

L'étape 1005 correspond à une étape de fin de calcul.

On comprendra que d'une manière générale, les étapes 1001, 1002, 1003 ainsi qu'une partie de l'étape 1004 pourront être effectuées au niveau du circuit de calcul 20, alors que la fin de l'étape 1004 et l'étape 1005 pourront au contraire être effectuées au niveau du circuit de calcul 30, par exemple.

Des indications seront données sur le processus de calcul de la transformée de Fourier précédemment mentionné.

D'une manière générale, le calcul de la transformée de Fourier est effectué sur quatre paquets successifs de 32 échantillons, N = 32, pondérés par la fenêtre de Blackman-Harris à trois coefficients précédemment mentionnée. Les paramètres w(n) sont obtenus par la relation précédemment mentionnée dans la description.

La transformée de Fourier sur N, avec N = 32, est alors effectuée par le calcul de X(p) pour les valeurs de p précédemment mentionnées dans la description, lesquelles correspondent aux quatre raies spectrales préférentielles mentionnées.

Les signaux étant réels, le spectre est à symétrie hermitienne et on a donc un recouvrement de la bande des fréquences de 0 à 8000 Hz. Compte tenu du fait que l'on ne calcule que quatre raies préférentielles, il est judicieux de ne pas utiliser une transformée de Fourier rapide. Au contraire, il est avantageux de regrouper des échantillons qui ont même valeur absolue de cosinus et sinus.

Le calcul peut alors être effectué compte tenu du fait que cos(2p+1).x est une fonction de cosx, et que sin(2p+1).x est une fonction de sinx. La connaissance de cos(nπ/8) est suffisante pour trouver toutes les valeurs de cosinus, et réciproquement, relativement à la valeur de sin(nπ/8) pour trouver toutes les valeurs de sinus nécessaires au calcul.

Un changement de variable

$$u(n) = w(n).\sup(\,|\cos(n\pi/8)|\,,\,|\sin(n\pi/8)|\,)$$

permet alors de calculer en fonction de la valeur de n appartenant à [0, n-1] les valeurs w(n), respectivement u(n).

Un calcul de sommes intermédiaires regroupant les valeurs de n correspondant à des mêmes valeurs absolues de cosinus et de sinus est alors effectué, puis un calcul de la transformée de Fourier proprement dite est effectué par calcul de la partie réelle Re(X(p)), respectivement de la partie imaginaire -Im(X(p)), à partir des sommes intermédiaires précédemment mentionnées.

On notera que d'une manière particulièrement avantageuse, dans le dispositif décrit en figure 2a, le premier circuit de calcul calcule huit valeurs de sommes intermédiaires dans les conditions précédemment mentionnées, et le deuxième calculateur 30 permet alors de calculer les parties réelles et imaginaires des valeurs spectrales correspondantes.

Une decription plus détaillée du mode de regroupement des résultats sera maintenant décrite ci-après.

On notera que le temps total d'observation dépend de la capacité de stockage de résultats disponibles et du temps élémentaire TE choisi par l'utilisateur en fonction de la finesse de l'observation souhaitée. Ce temps élémentaire TE pourra avantageusement être pris égal à un multiple du temps d'analyse TA. Durant le temps élémentaire TE, les résultats sont regroupés suivant le type d'analyse choisi pour être mémorisés vers la mémoire de sortie ou mémoire de résultat, la mémoire 33 sur la figure 2a. Bien entendu, la mémoire de résultat 33 est reliée à un port de sortie sur lequel pourra être interconnectée une station de travail à partir duquel l'utilisateur pourra opérer. Ainsi, le regroupement des résultats peut-il être effectué par le calculateur 30 au moyen d'un sous-programme de regroupement comportant, sur un temps élémentaire TE d'observation au choix de l'utilisateur, une routine d'analyse par type majoritaire de trafic pendant le temps élémentaire considéré. Dans ce type d'exploitation, c'est-à-dire de regroupement des résultats, le trafic retenu pour chaque voie est celui qui a été observé de façon majoritaire pendant le temps considéré. Le système d'analyse précédemment décrit en relation avec la figure 2a permettant de distinguer 15 types de signaux par voie, le trafic de chaque voie peut ainsi être caractérisé sur un demi-octet. Les 30 voies d'un concentrateur de type MIC peuvent alors être codées sur 15 octets. Ainsi, pourront être enregistrés, sur un disque de mémorisation de 1,44 Mo, 96 000 temps élémentaires TE de 16 ms correspondant à 25 minutes de surveillance ou analyse du trafic et plus de 2 heures pour un temps élémentaire TE de 80 ms.

En outre, le sous-programme de regroupement comprend une routine d'analyse quantitative du trafic voie par voie. Le type de trafic, c'est-à-dire la nature des signaux, est alors déterminé pour chaque voie, selon les critères de discrimination précédemment décrits, et comptabilisé dans une sous-routine de comptage correspondante. Après un temps élémentaire déterminé TE, par exemple pris égal à une minute, le contenu des 15 compteurs de chacune des 30 voies est transmis en mémoire résultat, chaque compteur élémentaire constitué par la sous-routine de comptage correspondante étant remis à 0 pour un nouveau temps élémentaire. Une telle analyse ne donne pas l'ordre dans lequel chaque type de signal a été détecté, mais uniquement le nombre de fois où il a été discriminé pendant le temps élémentaire TE précité. Le mot correspondant à chaque type de signal peut alors être composé d'un demi-octet caractéristique du type et, pour indiquer le nombre de fois où il a été rencontré, un second demi-octet est alors nécessaire pour un temps élémentaire de 400 ms par exemple. Pour des temps supérieurs, par exemple une minute, la partie comptage est codée sur 12 bits. Il est cependant très rare que pendant un temps élémentaire TE, on discrimine pour une voie donnée les 15 types de signaux. En conséquence, un certain nombre de mots ont leur partie de valeur de comptage égale à 0 en fin de temps élémentaire. Dans un tel cas, seuls les mots ayant un contenu de comptage significatif sont maintenus. Afin de repérer dans le fichier constitué par la valeur des mots mémorisés la fin de l'information correspondant au temps élémentaire analysé, le dernier mot a sa partie comptage, soit les 12 derniers bits, mise à la valeur 0, sa valeur réelle pouvant être déduite des autres valeurs relatives au même temps élémentaire TE. Ainsi, la durée minimale d'enregistrement qui correspond au cas où, sur toutes les voies, les 15 types de signaux sont trouvés à la fois pendant chaque temps élémentaire TE, est égale, pour un disque d'enregistrement de 1,44 Mo pour 30 voies, 2 octets étant attribués à chaque mot de comptage et pour 15 signaux, pour un temps élémentaire TE de 1 minute, à sensiblement 26 heures. Au contraire, si un seul type de signal est rencontré et discriminé par temps élémentaire pour chacune des voies, une même capacité d'enregistrement en mémoire permet d'enregistrer un temps quinze fois plus long, soit deux semaines. En pratique, la moyenne d e types de signaux par temps élémentaire précité pouvant être retenue, une durée d'enregistrement d'une semaine peut être envisagée.

En outre, le sous-programme de regroupement comporte une routine d'analyse quantitative globale du type de trafic. Dans ce cas, une sous-routine de comptage est affectée à chacun des types de signaux discriminés. Bien entendu, dans ce but, il est nécessaire qu'il n'y ait aucune confusion entre les différents types de signaux. On dispose ainsi 15 sous-routines de comptage pour l'ensemble des 30 voies, chaque sous-routine de comptage correspondant à un type de signal. Chaque sous-routine est alors incrémentée lorsque ce signal est rencontré sur l'une des voies, et l'on obtient donc un résultat global sans pouvoir remonter à une voie particulière.

Ainsi, pour un temps élémentaire TE de 16 ms, la durée d'enregistrement, selon une analyse quantitative globale, dans le cas où tous les signaux sont détectés, est d'environ, sur un support de mémorisation de 1, 44 Mo pour les 15 signaux auxquels sont affectés 0,5 octets de 192 000 temps élémentaires TE, 50 minutes. Pour un temps élémentaire TE de 1 minute, nécessitant des routines de comptage comportant des mots de 2 octets, cette durée est de 800 heures.

Enfin, selon un aspect avantageux du système objet de la présente invention, le sous-programme de regroupement des résultats comporte en outre une routine d'analyse chronologique voie par voie des signaux transmis. Dans ce cas, à chacune des voies est associée une sous-routine de discrimination-comptage permettant de comptabiliser le nombre de fois où chaque signal a été détecté pendant le temps élémentaire TE d'observation. Dans ce cas, à chaque nouveau signal rencontré à l'intérieur d'un temps élémentaire d'analyse, un nouveau mot est utilisé. Les quatre premiers bits permettent d'indiquer le type du signal et les 4 ou 12 bits suivants servent à comptabiliser le nombre de fois où il a été trouvé. De même que dans le cas de l'analyse quantitative globale, le dernier mot de chaque voie sert de séparateur, sa partie valeur de comptage étant forcée à la valeur 0. Le temps d'enregistrement dans le cas de 4 mots de 1 octet sur un support de 1,44 Mo pour 4 octets pour 30 voies est de 12 000 temps élémentaires TE pour un temps élémentaire de 12 secondes, soit 40 heures. Le temps maximum d'enregistrement est de 160 heures pour un seul mot transmis par temps élémentaire TE.

On signalera cependant que dans le cas d'un signal de parole, il n'est cependant pas envisageable de changer de mot de comptage à chaque silence. Deux routines de comptage sont alors utilisées, dans la première sont comptabilisés les signaux de paroles, et dans la seconde les silences de parole dont la durée est limitée à une valeur prédéterminée. Un silence d'une durée supérieure à cette valeur ne sera plus considérée comme un silence de parole.

On notera que le sous-programme de regroupement peut avantageusement être mis en oeuvre à partir de la mémoire morte 32 et du circuit de calcul 30, les résultats correspondants sous forme de mots de comptage étant mémorisés au niveau de la mémoire résultat 33, laquelle peut alors être exploitée par la station de travail de l'utilisateur.

L'architecture du système analyseur représenté en figure 2a est avantageuse, car elle permet, en raison de l'interconnexion des micro-processeurs de calcul 20 et 30 par l'intermédiaire des circuits de mémorisation auxiliaires 21 et 22, fonctionnant également de façon alternée, une grande souplesse d'utilisation et de répartition des tâches respectives.

En ce qui concerne les résultats, mémorisés dans la mémoire résultat 33, on indique, selon un mode de réalisation avantageux, que ceux-ci sont donnés sous forme de mots de 16 bits.

Les 4 bits de poids fort donnent le type du signal selon le tableau ci-après :
- 1 silence
- 2 2100 Hz S1
- 3 2100 Hz S2
- 4 Paroles
- 5 4800 bit/s S1
- 6 9600 bit/s S1
- 7 4800 bit/s S2
- 8 9600 bit/s S2
- 9 4800 bit/s S1 et S2
- 10 9600 bit/s S1 et S2
- 11 bruit S1
- 12 bruit S2
- 13 signalisation
- 14 signature (pattern) fixe ou retour d'appel S1
- 15 signature (pattern) fixe ou retour d'appel S2.

A chaque temps élémentaire TE, les mots correspondants trouvés sur chacune des voies sont transférés dans la mémoire résultat 33, laquelle a d'abord été initialisée à 0. Afin de diminuer le nombre de mots à mémoriser, seuls les mots ayant une partie comptage différente de 0 sont conservés, le dernier mot de chaque voie ayant sa partie compteur forcée à 0, avant transfert en mémoire résultat 33 et servant ainsi de séparateur. Son contenu est cependant facilement déduit du contenu des autres par complément à un nombre total dépendant des commandes données au calculateur 30. Dans le mode d'analyse chronologique voie par voie, le nombre maximum de mots conservés par voie est de 16. Dans ce cas, le dernier mot est forcé à la valeur FFFF en code hexadécimal.

Bien entendu, le système analyseur, objet de la présente invention, n'est pas limité au mode de réalisation tel que représenté en figure 2a. En particulier, et moyennant l'utilisation d'un circuit de calcul plus puissant, d'une part, et l'aménagement du processus de calcul de la transformée de Fourier, d'autre part, le temps de calcul effectif peut être réduit, ce qui permet, de manière avantageuse, de n'utiliser qu'un seul circuit de calcul.

Ainsi que représenté en figure 3, dans ce cas, le module 2 de traitement et le module 3 de compression comprennent 1 seul circuit de calcul noté 50, ce circuit de calcul étant constitué par un micro-processeur. Dans ce cas, ce micro-processeur est directement interconnecté aux première et deuxième mémoires d'échantillon 11 et 12 ainsi que représenté en Figure 3. Le processeur de calcul 50 peut alors être réalisé par un processeur de traitement de signal TMS 320C25 commercialisé par la société TEXAS INSTRUMENTS.

En ce qui concerne les aménagements du calcul de la transformée de Fourier, on indiquera simplement que la mémoire morte 53 associée au circuit de calcul 50 comporte alors une routine de pondération spatiotemporelle des échantillons, selon une fenêtre de Kaiser-Bessel. Dans ce cas, le paramètre a de pondération est pris égal à $\alpha = 43,7$. Les seuils de comparaison des valeurs spectrales sont alors adaptés en conséquence.

En outre, le calcul de la puissance du signal est effectué au moyen d'une routine dans laquelle ce calcul est effectué par somme des carrés des valeurs d'échantillons. Le calcul de la transformée de Fourier pour n échantillons peut être effectué sur un nombre d'échantillons le plus grand possible, par exemple 128. Un temps d'analyse TA de 16 ms peut alors être conservé. L'utilisation de la fenêtre de Kaiser-Bessel dans les conditions précitées permet d'obtenir des raies spectrales préférentielles semblables à celles obtenues dans le premier mode de réalisation. On constate alors que, pour n, n représentant le numéro d'ordre d'échantillon tel que n $\notin$ [42, 86], les coefficients sont suffisamment faibles pour être négligés, ce qui bien entendu simplifie les calculs.

On a ainsi décrit un système d'analyse de trafic d'analyse numérique particulièrement performant. En effet, le système analyseur précédemment décrit permet, par comparaison des paramètres de valeurs spectrales ou de fonction de ces valeurs à des valeurs de seuil déterminées, d'identifier la nature du signal avec une probabilité d'erreur inférieure à 1 % par temps d'analyse de 16 ms.

## Revendications

1. Système analyseur de trafic d'un ou plusieurs canaux de transmission multivoies de signaux numériques, ces signaux étant constitués par des échantillons numériques successifs, ce système comportant :
   - des moyens (1) d'acquisition et de mémorisation desdits échantillons, couplés au canal ou aux canaux de transmission,
   - des moyens (2) de traitement desdits échantillons mémorisés, le système étant caractérisé en que les moyens de traitement comportent au moins un circuit de discrimination dédié par type de signal transitant sur ledit canal ou lesdits canaux de transmission, et délivrant, en fonction de ce type de signal, des signaux de paramètres discriminés, et en ce qu'il comporte en outre

- des moyens (3) de compression desdits signaux de paramètres discriminés permettant, pour un ensemble de ces derniers, leur répartition, en fonction du type de signal ou d'un mode d'analyse temporel des voies constituant le ou les canaux de transmission, pour un ou plusieurs canaux en signaux résultats.

2. Système analyseur selon la revendication 1, caractérisé en ce que lesdits moyens (1) d'acquisition et de mémorisation comportent :

- un premier (11) et un deuxième (12) circuit mémoire d'échantillons, couplés aux voies dudit canal ou desdits canaux de transmission, le premier et le deuxième circuit mémoire d'échantillons fonctionnant de façon alternée à l'écriture respectivement la lecture, pendant une durée déterminée égale à un temps d'analyse desdits échantillons.

3. Système analyseur selon la revendication (1 ou 2) caractérisé en ce que les moyens (2) de traitement comportent des moyens (20) de calcul et de mémorisation auxiliaire (21, 22) permettant à partir de la lecture des échantillons mémorisés dans l'un des premier ou deuxième circuit mémoire, pendant un temps d'analyse précédent, d'effectuer le calcul, la mémorisation des valeurs spectrales et de puissance ou d'amplitude moyenne de ces échantillons et la discrimination de ces valeurs par comparaison de ces valeurs ou de fonctions de celles-ci à des valeurs de seuil, pour chaque sens de propagation des signaux sur le ou les canaux considéré, pour constituer lesdits signaux de paramètres discriminés.

4. Système analyseur selon la revendication 3, caractérisé en ce que lesdits moyens de mémorisation auxiliaire comportent un premier (21) et un deuxième (22) circuit de mémorisation auxiliaire, fonctionnant de façon alternée à l'écriture respectivement la lecture.

5. Système analyseur selon l'une des revendications précédentes, caractérisé en ce que les moyens de compression des signaux de paramètres discriminés comportent :

- des moyens de calcul permettant d'assurer le traitement des signaux de paramètres discriminés mémorisés dans l'un des premier (21) respectivement deuxième (22) circuit de mémorisation auxiliaire, pour engendrer les signaux de résultat,
- des moyens (33) de mémorisation des signaux de résultat.

6. Système analyseur selon l'une des revendications 3 à 5, caractérisé en ce que les moyens de calcul (20/30) et de mémorisation auxiliaire comportent des moyens de mise en oeuvre de sous-programmes permettant d'effectuer successivement :

- une détermination (1000) des valeurs spectrales du signal analysé sur un temps d'analyse TA déterminé, et une évaluation de la puissance ou de l'amplitude du signal analysé,
- une comparaison (2000) des valeurs spectrales, et de puissance, ou de fonctions de ces valeurs, à des valeurs de seuil, pour chaque sens de propagation de chaque voie du canal ou des canaux de transmission,
- une discrimination (3000) de la nature du signal présent sur la voie par critère de ressemblance, suite à la comparaison précitée,
- un regroupement (4000) des résultats par sélection selon une heuristique déterminée,
- une compression (5000) des résultats.

7. Système analyseur selon la revendication 6, caractérisé en ce que les moyens de mise en oeuvre du sous-programme (1000) permettant de déterminer les valeurs spectrales du signal analysé comporte les moyens de mise en oeuvre :

- d'une routine (1001) d'appel alterné des valeurs d'échantillons mémorisées au niveau des mémoires échantillons,
- d'une routine (1002) de pondération spatio-temporelle de ces échantillons à partir d'une fenêtre de pondération de type Blackman-Harris, de coefficients a(0), a(1), a(2) déterminés,
- d'une routine (1003) de sélection de quatre raies spectrales préférentielles uniformément réparties dans la bande de fréquence du signal analysé,
- d'une routine (1004) de calcul de transformée de Fourier selon la relation :

$$X(p) = \sum_{n=0}^{N-1} w(n).x(n).\cos\left(\frac{2\pi pn}{N}\right) - i \sum_{n=0}^{N-1} w(n).x(n).\sin\left(\frac{2\pi pn}{N}\right)$$

pour des valeurs de p = N/16, 3N/16, 5N/16 et 7N/16 représentatives des raies spectrales préférentielles précitées où w(n) vérifie l'expression :

$$w(n) = a(0) - a(1).\cos 2\pi n/32 + a(2).\cos 4\pi n/32,$$
$$0 \leqq n \leqq N - 1 \text{ et } N = 32.$$

8. Système selon l'une des revendications 1 à 7, caractérisé en ce que le sous-programme de regroupement des résultats comporte les moyens de mise en oeuvre, pour un regroupement sur un temps élémentaire TE d'observation au choix de l'utilisateur :
   - d'une routine d'analyse par type majoritaire de trafic, pendant le temps élémentaire considéré,
   - d'une routine d'analyse quantitative du trafic voie par voie, le type de trafic, nature des signaux, étant déterminé pour chaque voie et comptabilisé dans une sous-routine de comptage correspondante,
   - d'une routine d'analyse quantitative globale du type de trafic, une sous-routine de comptage étant affectée à chacun des types de signaux discriminés,
   - d'une routine d'analyse chronologique voie par voie, à chacune des voies étant associée une sous-routine de discrimination-comptage permettant de comptabiliser le nombre de fois où chaque signal a été détecté pendant le temps élémentaire TE d'observation.

9. Système analyseur selon l'une des revendications 5 à 8, caractérisé en ce que lesdits moyens (2) de traitement et moyens de calcul des moyens de compression (3) comprennent respectivement un microprocesseur de calcul (20, 30), lesdits microprocesseurs de calculs étant interconnectés par l'intermédiaire desdits premier (21) et deuxième (22) circuits de mémorisation auxiliaire fonctionnant de façon alternée.

10. Système analyseur selon l'une des revendications 1 à 3, caractérisé en ce que les moyens (2) de traitement et moyens (3) de compression comprennent un microprocesseur de calcul (50), ce microprocesseur étant directement interconnecté auxdites premières et deuxièmes mémoires d'échantillons.

11. Système selon la revendication 10, caractérisé en ce que ledit microprocesseur comporte les moyens de mise en oeuvre :
    - d'une routine de pondération spatio-temporelle des échantillons selon une fenêtre de KAISER-BESSEL, le paramètre $\alpha$ de pondération étant pris égal à $\alpha = 43,7$, les seuils de comparaison des valeurs spectrales étant adaptés en conséquence,
    - d'une routine de calcul de la puissance du signal analysé par somme des carrés des valeurs d'échantillons.

## Patentansprüche

1. Analysatorsystem des Verkehrs in einem oder mehreren Mehrwegübertragungskanälen für digitale Signale, wobei diese Signale von aufeinanderfolgenden digitalen Abtastwerten gebildet sind und wobei dieses System umfaßt
   - Mittel (1) zur Erlangung und zur Speicherung der Abtastwerte, welche mit dem Übertragungskanal oder den Übertragungskanälen gekoppelt sind,
   - Mittel (2) zur Verarbeitung der gespeicherten Abtastwerte, wobei das System dadurch gekennzeichnet ist, daß die Mittel zur Verarbeitung wenigstens eine Unterscheidungsschaltung umfassen, welche für den auf dem Übertragungskanal oder den Übertragungskanälen durchlaufenden Signaltyp vorgesehen ist und als Funktion dieses Signals Signale mit unterschiedenen Parametern liefert, und daß es ferner umfaßt
   - Mittel (3) zur Komprimierung der Signale mit unterschiedenen Parametern, welche für eine Gesamtheit dieser letzteren deren Verteilung,. als Funktion des Signaltyps oder eines temporären Analysemodus der den oder die Übertragungskanäle bildenden Wege, für einen oder mehrere Kanäle in resultierende Signale ermöglichen.

2. Analysatorsystem nach Anspruch 1, dadurch gekennzeichnet, daß die Mittel (1) zur Erlangung und zur Speicherung umfassen:
- eine erste (11) und eine zweite Abtastwertspeicherschaltung (12), welche mit den Wegen des Übertragungskanals oder der Übertragungskanäle gekoppelt sind, wobei die erste und die zweite Abtastwertspeicherschaltung zum Schreiben bzw. Lesen in alternierender Weise während einer bestimmten Zeitdauer arbeiten, welche gleich einer Analysezeit der Abtastwerte ist.

3. Analysatorsystem nach Anspruch 1 oder 2, dadurch gekennzeichnet, daß die Mittel (2) zur Verarbeitung Mittel (20) zur Berechnung und zur Hilfsspeicherung (21, 22) umfassen, welche ausgehend vom Lesen der in der ersten oder der zweiten Speicherschaltung während einer vorherigen Analysezeit gespeicherten Abtastwerte die Durchführung der Berechnung, der Speicherung der Spektralwerte und der Werte der Leistung oder der mittleren Amplitude dieser Abtastwerte und die Unterscheidung dieser Werte durch Vergleich von diesen Werten oder von Funktionen derselben mit Schwellenwerten für jede Ausbreitungsrichtung der Signale in dem oder den betrachteten Kanälen ermöglichen, um die Signale mit unterschiedenen Parametern zu bilden.

4. Analysatorsystem nach Anspruch 3, dadurch gekennzeichnet, daß die Hilfsspeichermittel eine erste (21) und eine zweite Hilfsspeicherschaltung (22) umfassen, welche in alternierender Weise zum Schreiben bzw. Lesen arbeiten.

5. Analysatorsystem nach einem der vorhergehenden Ansprüche, dadurch gekennzeichnet, daß die Mittel zur Komprimierung der Signale mit unterschiedenen Parametern umfassen:
- Mittel zur Berechnung, welche es ermöglichen, die Verarbeitung der in der ersten (21) bzw. der zweiten Hilfsspeicherschaltung (22) gespeicherten Signale mit unterschiedenen Parametern zu gewährleisten, um die resultierenden Signale zu erzeugen,
- Mittel (33) zum Speichern der resultierenden Signale.

6. Analysatorsystem nach einem der Ansprüche 3 bis 5, dadurch gekennzeichnet, daß die Mittel zur Berechnung (20/30) und zur Hilfsspeicherung Mittel zur Durchführung von Unterprogrammen umfassen, welche es ermöglichen, aufeinanderfolgend durchzuführen:
- eine Bestimmung (1000) der Spektralwerte des in einer bestimmten Analysezeit TA analysierten Signals und eine Auswertung der Leistung oder der Amplitude des analysierten Signals,
- einen Vergleich (2000) der Spektralwerte und der Leistung oder von Funktionen dieser Werte mit Schwellenwerten, für jede Ausbreitungsrichtung jedes Wegs des Übertragungskanals oder der Übertragungskanäle,
- eine Unterscheidung (3000) der Art des in dem Weg vorhandenen Signals durch ein Ähnlichkeitskriterium nach dem genannten Vergleich,
- eine Gruppierung (4000) der Resultate durch Auswahl gemäß einer bestimmten Heuristik,
- eine Komprimierung (5000) der Resultate.

7. Analysatorsystem nach Anspruch 6, dadurch gekennzeichnet, daß die Mittel zur Durchführung des Unterprogramms (1000), welches die Bestimmung der Spektralwerte des analysierten Signals ermöglicht, Mittel umfassen zur Durchführung:
- einer Routine (1001) zum alternierenden Aufruf der auf Ebene der Abtastwertspeicher gespeicherten Abtastwerte,
- einer Routine (1002) zur raum-zeitlichen Gewichtung dieser Abtastwerte ausgehend von einem Gewichtungsfenster des Blackman-Harris-Typs mit bestimmten Koeffizienten a(0), a(1), a(2),
- einer Routine (1003) zur Auswahl von vier bevorzugten Spektrallinien, welche gleichmäßig in dem Frequenzband des analysierten Signals verteilt sind,
- einer Routine (1004) zur Berechnung der Fourier-Transformierten gemäß der Beziehung:

$$X(p) = \sum_{n=0}^{N-1} w(n).x(n).\cos(2\pi p\underline{n}) - i \sum_{n=0}^{N-1} w(n).x(n).\sin(2\pi p\underline{n})$$
$$\qquad\qquad\qquad\qquad\quad N \qquad\qquad\qquad\qquad\qquad\qquad N$$

für Werte von p=N/16, 3N/16, 5N/16 und 7N/16, welche den genannten, bevorzugten Spektrallinien entsprechen, wobei w(n) dem Ausdruck:
w(n) = a(0) - a(1).cos2πn/32 + a(2).cos4πn/32, mit $0 \leqq n \leqq N-1$ und N = 32 genügt.

8.  System nach einem der Ansprüche 1 bis 7, dadurch gekennzeichnet, daß das Unterprogramm zur Gruppierung der Resultate die Mittel zur Durchführung für eine Gruppierung in einer vom Verwender gewählten Elementarzeit TE der Beobachtung umfassen:
    - eine Routine zur Analyse mittels Verkehrsmajoritätstyp während der betrachteten Elementarzeit,
    - eine Routine zur Weg-für-Weg-weisen, quantitativen Analyse des Verkehrs, wobei der Typ des Verkehrs und die Art der Signale für jeden Weg bestimmt und in einer entsprechenden Zähl-Unterroutine verbucht werden,
    - eine Routine zur globalen, quantitativen Analyse des Verkehrstyps, wobei eine Zähl-Unterroutine jedem der unterschiedenen Signaltypen zugeordnet ist,
    - eine Routine zur chronologischen, Weg-für-Wegweisen Analyse, wobei jedem der Wege eine Unterscheidungs-Zähl-Unterroutine zugeordnet ist, welche es ermöglicht, zu verbuchen, wie oft jedes Signal während der Elementarzeit TE der Beobachtung erfaßt worden ist.

9.  Analysatorsystem nach einem der Ansprüche 5 bis 8, dadurch gekennzeichnet, daß die Mittel (2) zur Verarbeitung und die Mittel zur Berechnung der Mittel zur Komprimierungsmittel (3) jeweils einen Berechnungsmikroprozessor (20, 30) umfassen, wobei die Berechnungsmikroprozessoren mittels einer ersten (21) und einer zweiten Hilfsspeicherschaltung (22) verbunden sind, welche in alternierender Weise arbeiten.

10. Analysatorsystem nach einem der Ansprüche 1 bis 3, dadurch gekennzeichnet, daß die Mittel (2) zur Verarbeitung und Mittel (3) zur Komprimierung einen Berechnungsmikroprozessor (50) umfassen, wobei dieser Mikroprozessor direkt mit dem ersten und dem zweiten Abtastwertspeicher verbunden ist.

11. Analysatorsystem nach Anspruch 10, dadurch gekennzeichnet, daß der Mikroprozessor Mittel umfaßt zur Durchführung
    - einer raum-zeitlichen Gewichtungsroutine der Abtastwerte gemäß einem KAISER-BESSEL-Fenster, wobei der Gewichtungsparameter $\alpha$ gleich $\alpha$=43,7 ist und die Vergleichsschwellen der Spektralwerte dementsprechend angepaßt sind,
    - einer Routine zur Berechnung der Leistung des analysierten Signals durch Summierung der Quadrate der Werte der Abtastwerte.

## Claims

1.  A traffic-analyzing system for one or more digital signal multipath transmission channels, these signals consisting of successive digital samples, said system including means (1) of acquiring and storing said samples, coupled to the transmission channel or channels, means (2) of processing said stored samples, said system being characterized by these processing means including at least one dedicated discrimination circuit per signal type travelling over said channel or said transmission channels, and delivering, as a function of this signal type, discriminated parameter signals, said system further including means (3) of compressing said discriminated parameter signals permitting, for a set of the latter, their distribution, as a function of the signal type or of a temporal mode of analysis of the paths composing the transmission channel(s), in respect of one or more channels, as results signals.

2.  The analyzing system as claimed in claim 1, characterized by said acquisition and storage means (1) including a first (11) and a second (12) sample memory circuit, which are coupled to the paths of said channel or of said transmission channels, the first and the second sample memory circuit operating alternately on writing respectively reading, for a specified duration equal to an analysis time for said samples.

3.  The analyzing system as claimed in claim 1 or 2, characterized by said processing means (2) including auxiliary storage (21, 22) and computation means (20) making it possible, through reading samples stored in one of the first or second memory circuits, during a preceding analysis time, to perform the computation, storage of the spectral and power or average amplitude values of these samples and the discrimination of these values by comparing these values or functions of them with threshold values, for each direction of propagation of the signals over the relevant channel(s), in order to compose said discriminated parameter signals.

4. Analyzing system as claimed in claim 3, characterized by said auxiliary storage means including a first (21) and a second (22) auxiliary storage circuit operating alternately on writing respectively reading.

5. Analyzing system as claimed in one of the preceeding claims, characterized by said means for compressing the discriminated parameter signals including :
   - computation means making it possible to ensure the processing of the discriminated parameter signals stored in one of the first (21) respectively second (22) auxiliary storage circuits, in order to produce the result signals,
   - means (33) of storing the result signals.

6. The analyzing system as claimed in one of claims 3 to 5, characterized by said computation (20/30) and auxiliary storage means including means for operating subroutines making it possible to perform in succession :
   - a determination (1000) of the spectral values of the analyzed signal over a specified analysis time TA, and an evaluation of the power or the amplitude of the analyzed signal,
   - a comparison (2000) of the spectral values, and of power, or of functions of these values, with threshold values, for each direction of propagation of each path of the channel or of the transmission channels,
   - a discrimination (3000) of the nature of the signal present on the path by a resemblance criterion, following the above-mentioned comparison,
   - a grouping (4000) of the results by selection according to a specified heuristic,
   - a compression (5000) of the results.

7. The analyzing system as claimed in claim 6, characterized by means for operating the subroutine (1000) making it possible to determine the spectral values of the analyzed signal including means for operating :
   - a routine (1001) for alternate calling of the sample values stored at sample memory level,
   - a routine (1002) for spatial-temporal weighting of these samples on the basis of a Blackman-Harris type weighting window, with specified coefficients a(0), a(1), a(2),
   - a routine (1003) for selecting four preferential spectral lines uniformly distributed within the frequency band of the analyzed signal,
   - a routine (1004) for computing a Fourier transform according to the relation :

$$X(p) = \sum_{n=0}^{N-1} w(n).x(n).\cos\left(2\pi p \frac{n}{N}\right) - i \sum_{n=0}^{N-1} w(n).x(n).\sin\left(2\pi p \frac{n}{N}\right)$$

for values of p = N/16, 3N/16, 5N/16 and 7N/16 representative of the above-mentioned preferential spectral lines, where w(n) satisfies the expression :
w(n) = a(0) - a(1).cos2πn/32 + a(2).cos4πn/32, $0 \leq n \leq$ N-1 and N = 32.

8. The system as claimed in one of claims 1 to 7, wherein the subroutine for grouping the results includes, for a grouping over an elementary observation time TE chosen by the user, means for operating :
   - a routine for analysis by majority type of traffic, over the relevant elementary time,
   - a routine for path by path quantitative analysis of the traffic, the traffic type, and nature of the signals, being determined for each path and totalled in a corresponding accounting subroutine,
   - a routine for overall quantitative analysis of the traffic type, one counting subroutine being assigned to each of the discriminated signal types,
   - a routine for path by path chronological analysis, one discrimination-counting subroutine being associated with each of the paths, making it possible to total the number of times each signal has been detected during the elementary observation time TE.

9. The analyzing system as claimed in one of claims 5 to 8, wherein said processing means (2) and means of computation of the compression means (3) comprise respectively a computational microprocessor (20, 30), said computational microprocessors being interconnected by way of said first (21) and second (22) auxiliary storage circuits operating alternately.

10. The analyzing system as claimed in one of claims 1 to 3, wherein the processing means (2) and compression means (3) comprise a computational microprocessor (50), this microprocessor being directly interconnected with said first and second sample memories.

11. The system as claimed in claim 10, wherein said micro processor includes means for operating :
   - a routine for spatial-temporal weighting of the samples according to a KAISER-BESSEL window, the weighting parameter $\alpha$ being taken equal to $\alpha = 43.7$, the comparison thresholds for the spectral values being matched accordingly,
   - a routine for computing the power of the analyzed signal by summing the squares of the sample values.

# FIG.1
## (ART ANTERIEUR)

⟶ x

canal { ligne bifilaire

ITO ⌐IT1  ITi  ITn−1  ITO

⟵————— 125 μs —————⟶ temps

n voies notées ITO à ITn−1

# FIG.3

vers utilisateur

2, 3

| MEMOIRE RESULTATS | 33 |

| 53 | EPROM |    | MICRO−PROCESSEUR RAPIDE DE CALCUL | 50 |

| 13 LOGIQUE ET COMPTEUR | 11 MEMOIRE ECHANTILLONS 1 | 12 MEMOIRE ECHANTILLONS 2 |

10a  10b

synchronisation    MIC

ITO    IT1 à ITn−1

1

# FIG. 2a

vers utilisateur

MEMOIRE RESULTATS ~33

32 EPROM

31 MEMOIRE INTERMEDIAIRE

MICRO-PROCESSEUR DE CALCUL '30

3

MEMOIRE PARAMETRES 21

MEMOIRE PARAMETRES 22

23 EPROM

MICRO-PROCESSEUR DE CALCUL 20

2

13 LOGIQUE ET COMPTEUR

11 MEMOIRE ECHANTILLONS

12 MEMOIRE ECHANTILLONS

10a

10b

1

synchronisation

MIC

ITO

IT1 à ITn−1

# FIG. 2b

```
┌─────────────────────────────────────────┐
│ -DETERMINATION DES VALEURS SPECTRALES    │
│    SUR TEMPS D'ANALYSE TA<25 ms          │      1000
│    -EVALUATION DE LA PUISSANCE OU         │
│    AMPLITUDE DU SIGNAL SUR t<TA           │
└─────────────────────────────────────────┘
                    │
                    ▼
┌─────────────────────────────────────────┐
│ COMPARAISON DES VALEURS OBTENUES OU      │
│ DE FONCTIONS DE CES VALEURS A DES         │      2000
│ VALEURS DE SEUIL POUR CHAQUE SENS         │
│              DE VOIE                       │
└─────────────────────────────────────────┘
                    │
                    ▼
┌─────────────────────────────────────────┐
│ NATURE DU SIGNAL PRESENT SUR LA VOIE     │
│ PAR CRITERE DE RESSEMBLANCE, SENS OU      │      3000
│              DUPLEX                        │
└─────────────────────────────────────────┘
                    │
                    ▼
┌─────────────────────────────────────────┐
│      REGROUPEMENT DES RESULTATS          │      4000
└─────────────────────────────────────────┘
                    │
                    ▼
┌─────────────────────────────────────────┐
│      COMPRESSION DES RESULTATS           │      5000
└─────────────────────────────────────────┘
```

# FIG.2c

| ECHANTILLONS MEMORISES | MEMORISATION ECHANTILLONS |
|---|---|
| LECTURE | ECRITURE |

1001

PONDERATION : FENETRE DE BLACKMAN–HARRIS

$a(0)=0{,}42323 \quad a(1)=0{,}49755 \quad a(2)=0{,}07922$

1002

SELECTION DE 4 RAIES

500 Hz, 1500 Hz, 2500 Hz, 3500 Hz

1003

CALCUL DE TRANSFORMEE DE FOURIER

$$X(p)=\sum_{n=0}^{N-1} w(n).x(n).\cos(2\pi p\frac{n}{N})\sum_{n=0}^{N-1} w(n).x(n).\sin(2\pi p\frac{n}{N})$$

ReX(p)
ImX(p)

1004

FIN

1005